# EUROPEAN PATENT SPECIFICATION

(11) **EP 4 151 676 B1**
(45) Date of publication and mention of the grant of the patent: **05.03.2025**
(21) Application number: 21804191.1
(22) Date of filing: 11.05.2021
(51) Int. Cl.: C08J 3/24, C08K 5/00, C08K 5/14, C08K 5/3492, C08L 27/12, C09K 3/10, F16J 15/10

(54) **RUBBER COMPOSITION, FLUOROELASTOMER, AND SEALING MATERIAL**
KAUTSCHUKZUSAMMENSETZUNG, FLUORELASTOMER UND DICHTUNGSMATERIAL
COMPOSITION DE CAOUTCHOUC, FLUOROÉLASTOMÈRE ET MATÉRIAU D'ÉTANCHÉITÉ

(30) Priority: 14.05.2020 JP 2020084974; 25.09.2020 JP 2020160380
(43) Date of publication of application: 22.03.2023
(73) Proprietor: Nichias Corporation, Tokyo 104-8555 (JP)
(72) Inventor: SHIMIZU, Tomoya, Tokyo 104-8555 (JP); OBARA, Shogo, Tokyo 104-8555 (JP); MATSUMURA, Takashi, Tokyo 104-8555 (JP); OIKAWA, Jun, Tokyo 104-8555 (JP); TERASAKI, Ryunosuke, Tokyo 104-8555 (JP)
(74) Representative: Schmitz, Joseph
(86) International application number: PCT/JP2021/017845
(87) International publication number: WO 2021/230231

(56) References cited:
- EP-A1- 1 834 990
- EP-A1- 2 484 722
- EP-A1- 3 243 811
- WO-A1-2014/167797
- WO-A1-2020/129804
- JP-A- 2016 145 167
- JP-A- 2016 145 277
- JP-A- 2017 214 555
- JP-A- 2019 052 226

## Description

### Technical Field

The invention relates to a rubber composition, a fluorine-containing elastomer, and a seal material, which are excellent in mechanical properties, can reduce compression set, have excellent plasma resistance, and can prevent generation of particles.

### Background Art

Patent Documents 1 to 4 disclose fluorine-containing elastomers.

### Related Art Documents

### Patent Documents

[Patent Document 1] WO 95/002634 A1
[Patent Document 2] JP 2000-34380 A
[Patent Document 3] JP 2006-342241 A
[Patent Document 4] JP 2019-052226 A

### Summary of the Invention

For example, a seal material for a semiconductor manufacturing apparatus (a plasma apparatus, an etching apparatus, a plasma chemical vapor deposition (CVD) apparatus, or the like) requires mechanical properties from the viewpoint of handling property and prevention of torsion during sliding. In addition, from the viewpoint of sealability, the compression set is required to be small. Furthermore, excellent plasma resistance and prevention of particle generation are also required.

Conventional arts, including Patent Documents 1 to 4, impart mechanical properties and small compression set to a seal material by radiation treatment at the time of crosslinking and the use of a filler. However, it has been found that such a method is difficult to achieve both the above-described plasma resistance and the prevention of particle generation. Specifically, in the methods of Patent Documents 1 and 2, a fluororesin or carbon black is added in order to impart mechanical properties to the seal materials, but it was found that the fluororesin or carbon black becomes particles when exposed to plasma. In Patent Documents 3 and 4, the mechanical properties were adjusted by radiation crosslinking without blending a filler, but it was found that the plasma resistance was deteriorated while no particles were generated.

Therefore, an object of the invention is to provide a rubber composition, a fluorine-containing elastomer, and a seal material, which are excellent in mechanical properties, can reduce compression set, have excellent plasma resistance, and can prevent generation of particles.

According to the invention, the following rubber composition and so one are provided.
1. A rubber composition comprising:
   (a) a crosslinking reactive fluorine-containing rubber,
   (b) a compound represented by the following formula (b-1): 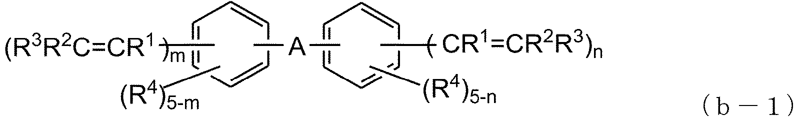 wherein in the formula (b-1), A is a single bond, -O-, -S-, a heteroatom-containing group, a linear or branched alkylene group, a cycloalkylene group, or an arylene group, in which no hydrogen atom is replaced by a fluorine atom or a part or all of hydrogen atoms are replaced by a fluorine atom; R¹, R², R³, and R⁴ are independently selected from the group consisting of a hydrogen atom, a fluorine atom, an alkyl group, a fluorinated alkyl group, or a substituted or unsubstituted aryl group; a plurality of R¹'s are the same as or different from each other, a plurality of R²'s are the same as or different from each other; a plurality of R³'s are the same as or different from each other; a plurality of R⁴'s are the same as or different from each other, at least one of R¹, R², and R³ is a fluorine atom or a group having a fluorine atom; m is an integer of 1 to 5; and n is an integer of 1 to 5; and
   (c) a compound represented by the following formula (c-1): 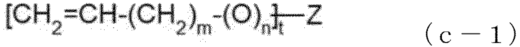 wherein in the formula (c-1), n and m are independently 0 or 1; t is an integer of 2 or more; and Z is a t-valent linking group.
2. The rubber composition according to 1, further comprising (d) an organic peroxide.
3. The rubber composition according to 1 or 2, further comprising (e) one or more selected from the group consisting of a reactive compound having a perfluoro skeleton or a siloxane skeleton, and a fluorine-containing oligomer.
4. The rubber composition according to any one of 1 to 3, wherein the component (b) is comprised in an amount of 5 to 30 mmol based on 100 g of the component (a).
5. The rubber composition according to any one of 1 to 4, wherein the component (c) is comprised in an amount of 2 to 30 mmol based on 100 g of the component (a).
6. A rubber composition according to any one of 1 to 5, wherein the component (b) and the component (c) are comprised in a total amount of 7 to 40 mmol based on 100 g of the component (a).7. The rubber composition according to any one of 1 to 6, wherein the component (c) is triallylisocyanurate or 1,6-divinyl(dodecafluorohexane).
8. A fluorine-containing elastomer obtained by crosslinking the rubber composition according to any one of 1 to 7.
9. A seal material comprising the fluorine-containing elastomer according to 8.

According to the invention, a rubber composition, a fluorine-containing elastomer, and a seal material, which are excellent in mechanical properties, can reduce compression set, have excellent plasma resistance, and can prevent generation of particles can be provided.

### Mode for Carrying out the Invention

Hereinafter, the rubber composition, the fluorine-containing elastomer, and the seal material of the invention will be described in detail.

In this specification, "x to y" represents a numerical range of "x or more and y or less." The upper and lower limits described for the numerical range can be combined arbitrarily.

Also, combinations of two or more of the individual embodiments of the invention described below are also embodiments of the invention.

The rubber composition according to an aspect of the invention contains:
(a) a crosslinking reactive fluorine-containing rubber,
(b) a compound represented by the following formula (b-1): 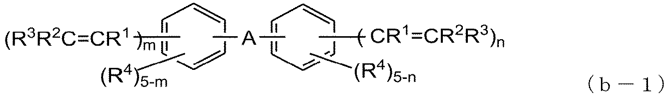 wherein in the formula (b-1), A is a single bond, -O-, -S-, a heteroatom-containing group, a linear or branched alkylene group, a cycloalkylene group, or an arylene group, in which no hydrogen atom is replaced by a fluorine atom or a part or all of hydrogen atoms are replaced by a fluorine atom; R¹, R², R³, and R⁴ are independently selected from the group consisting of a hydrogen atom, a fluorine atom, an alkyl group, a fluorinated alkyl group, or a substituted or unsubstituted aryl group; a plurality of R¹'s are the same as or different from each other; a plurality of R²'s are the same as or different from each other; a plurality of R³'s are the same as or different from each other; a plurality of R⁴'s are the same as or different from each other, at least one of R¹, R², and R³ is a fluorine atom or a group containing a fluorine atom; m is an integer of 1 to 5; and n is an integer of 1 to 5; and
(c) a compound represented by the following formula (c-1): 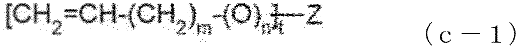 wherein in the formula (c-1), n and m are independently 0 or 1; t is an integer of 2 or more; and Z is a t-valent linking group.

According to the rubber composition of this aspect, effects of being excellent in mechanical properties, being able to reduce compression set, being excellent in plasma resistance, and being able to prevent generation of particles can be obtained. In particular, effects of being excellent in mechanical properties, an effect of being able to reduce compression set, an effect of being excellent in plasma resistance, and an effect of being able to prevent generation of particles can be exhibited in good balance.

In this aspect, by using the component (b) and the component (c) in combination as the co-crosslinking agent, the mechanical properties of the crosslinked body (fluorine-containing elastomer) obtained by crosslinking the rubber composition are excellent (for example, hardness is increased), and the compression set can be reduced at the same time. Further, the processability (kneading property) can be increased as compared with the case where the composition (c) is used alone as the co-crosslinking agent.

In this aspect, mechanical properties and reduced compression set can be achieved without necessarily relying on radiation treatment or addition of a filler. Therefore, the use of radiation treatment or a filler which causes the plasma resistance to be impaired or the particle generation can be reduced or omitted.

The rubber composition of this aspect is crosslinked using, for example, an organic peroxide (component (d)) blended as an arbitrary component to obtain a crosslinked body (fluorine-containing elastomer).

The rubber composition of this aspect may contain, for example, a reactive compound, a fluorine-containing oligomer (component (e)), or other component (component (f)) as an arbitrary component.

Hereinafter, each component will be described.

### (Component (a): Crosslinking reactive fluorine-containing rubber)

The component (a) is a crosslinking reactive fluorine-containing rubber.

The term "crosslinking reactive" fluorine-containing rubber means a fluorine-containing rubber that can be crosslinked through a crosslinking reaction. The crosslinking reactive fluorine-containing rubber may have, for example, a repeating unit derived from a fluorine-containing monomer. The crosslinking reactive fluorine-containing rubber may have a repeating unit derived from one or two or more fluorine-containing monomers.

Examples of the fluorine-containing monomer include, for example, tetrafluoroethylene (TFE) represented by the following formula (a-1), hexafluoropropylene (HFP) represented by the following formula (a-2), and the like.

CF₂=CF₂ (a-1)

CF₂=CFCF₃ (a-2)

Examples of the fluorine-containing monomer include, for example, perfluoroolefins having one unsaturated bond of ethylene type, preferably at the terminal position. Specific examples thereof include a perfluoroalkyl vinyl ether (PAVE) represented by the following formula (a-3), a perfluorooxyalkyl vinyl ether represented by the following formula (a-4), a perfluorovinyl ether represented by the following formula (a-5), and the like.

CF₂=CFOR^{f1} (a-3)

wherein in the formula (a-3), R^{f1} is a perfluoroalkyl group including 1 to 6 carbon atoms, for example, a trifluoromethyl group or a pentafluoropropyl group.

CF₂=CFOR^{f2} (a-4)

wherein in the formula (a-4), R^{f2} is a perfluorooxyalkyl group including 1 to 12 carbon atoms containing one or more ether groups, for example, a perfluoro-2-propoxypropyl group.

CF₂=CFOCF₂OR^{f3} (a-5)

wherein in the formula (a-5), R^{f3} is a linear or branched perfluoroalkyl group including 2 to 6 carbon atoms, a cyclic perfluoroalkyl group including 5 or 6 carbon atoms, or a linear or branched perfluorooxyalkyl group including 2 to 6 carbon atoms and 1 to 3 oxygen atoms.

In one embodiment, the perfluorovinyl ether represented by the formula (a-5) is one represented by the following formula (a-6) or formula (a-7). The perfluorovinyl ether represented by the formula (a-6) may be referred to as "MOVE1," and the perfluorovinyl ether represented by the formula (a-7) may be referred to as "MOVE2."

CF₂=CFOCF₂OCF₂CF₃ (a-6)

CF₂=CFOCF₂OCF₂CF₂OCF₃ (a-7)

In one embodiment, the crosslinking reactive fluorine-containing rubber may be a copolymer having a repeating unit derived from one or more fluorine-containing monomers selected from the group consisting of the monomers represented by each of the formula (a-1) and the formula (a-2), and a repeating unit derived from one or more fluorine-containing monomers (comonomer) selected from the group consisting of the monomers represented by each of the formula (a-3) to the formula (a-5).

The composition ratio (molar ratio) of the fluorine-containing monomers used for producing the crosslinking reactive fluorine-containing rubber is not particularly limited.

In one embodiment, the crosslinking reactive fluorine-containing rubber is produced using 50 to 85 mol % of one or more fluorine-containing monomers selected from the group consisting of the monomers represented by each of the formula (a-1) and the formula (a-2), and 15 to 50 mol % of one or more fluorine-containing monomers selected from the group consisting of the monomers represented by each of the formula (a-3) to the formula (a-5).

In one embodiment, the crosslinking reactive fluorine-containing rubber is produced using 50 to 85 mol % of TFE and 15 to 50 mol % of PAVE.

In one embodiment, the crosslinking reactive fluorine-containing rubber is produced using 50 to 85 mol % of TFE and 15 to 50 mol % of MOVE. Herein, "MOVE" is one or more selected from the group consisting of MOVE1 and MOVE2.

In one embodiment, the crosslinking reactive fluorine-containing rubber has or does not have a unit derived from vinylidene fluoride.

The crosslinking reactive fluorine-containing rubber includes, for example, fluorine rubbers (FKM) such as a vinylidene fluoride/hexafluoropropylene copolymer (binary FKM), a vinylidene fluoride/hexafluoropropylene/tetrafluoroethylene copolymer (temary FKM), a vinylidene fluoride/hexafluoropropylene/perfluoroalkyl vinyl ether copolymer, a tetrafluoroethylene/propylene copolymer, a hexafluoropropylene/ethylene copolymer, a tetrafluoroethylene/ethylene/perfluoroalkyl vinyl ether copolymer, and a vinylidene fluoride/2,3,3,3-tetrafluoropropylene; perfluoro rubbers such as a tetrafluoroethylene/perfluoroalkyl vinyl ether copolymer (FFKM); and the like.

In one embodiment, the crosslinking reactive fluorine-containing rubber has or does not have a unit derived from fluoroolefins including 3 to 8 carbon atoms and an iodine atom and/or a bromine atom.

The crosslinking reactive fluorine-containing rubber preferably has an iodine atom and/or a bromine atom, more preferably has an iodine atom, as a radical attack site during crosslinking (curing). Such a crosslinking reactive fluorine-containing rubber which is curable with a peroxide includes ones described in, for example, JP 2006-9010 A, and the like.

The crosslinking reactive fluorine-containing rubber generally contains iodine atoms in an amount of 0.001% to 5% by mass, preferably 0.01% to 2.5% by mass, based on the total mass of the polymer. The iodine atom may be present along the chain and/or at the terminal of the crosslinking reactive fluorine-containing rubber.

### (Component (b): Compound represented by formula (b-1))

The component (b) is a compound represented by the formula (b-1) described above.

In one embodiment, the linear or branched alkylene group for A in the formula (b-1) includes the number of 1 to 15, preferably 1 to 6 carbon atoms. Examples of the alkylene group include a methylene group, an ethylene group, a propylene group, and the like. In the linear or branched alkylene group, the hydrogen atom is not replaced by a fluorine atom, or a part or all of the hydrogen atoms are replaced by fluorine atoms.

In one embodiment, the cycloalkylene group for A has the number of 3 to 8, preferably 3 to 6 carbon atoms. In the cycloalkylene group, the hydrogen atom is not replaced by a fluorine atom, or a part or all of the hydrogen atoms are replaced by fluorine atoms.

In one embodiment, the arylene group for A includes the number of 6 to 18, preferably 6 to 12 carbon atoms. Examples of the arylene group include a phenylene group, a naphthylene group, and the like. In the arylene group, the hydrogen atom is not replaced by a fluorine atom, or a part or all of the hydrogen atoms are replaced by fluorine atoms.

In one embodiment, the alkyl group or the alkyl residue in the fluorinated alkyl group for R¹, R², R³, and R⁴ is a linear or branched alkyl group including the number of carbon atoms of 1 to 15, more preferably 1 to 6. In one embodiment, the fluorinated alkyl group is an alkyl group in which a part or all of the hydrogen atoms are replaced by fluorine atoms. In one embodiment, the fluorinated alkyl group is an alkyl group (perfluoroalkyl group) in which all hydrogen atoms are replaced by fluorine atoms.

In one embodiment, the aryl group for R¹, R², R³, and R⁴ includes the number of 6 to 18, preferably 6 to 12 carbon atoms. Examples of the aryl group include a phenyl group, a naphthyl group, and the like. The substituent of the aryl group is a fluorine atom, a linear or branched alkyl group, a cycloalkyl group, an aryl group, or the like, and in these groups, a hydrogen atom is not replaced by a fluorine atom, or a part or all of hydrogen atoms are replaced by fluorine atoms. The linear or branched alkyl group preferably includes the number of 1 to 15 carbon atoms (more preferably 1 to 6 carbon atoms). The cycloalkyl group preferably includes the number of 3 to 8 carbon atoms (more preferably 3 to 6 carbon atoms). The aryl group preferably includes the number of 6 to 18 carbon atoms (more preferably 6 to 12 carbon atoms).

Examples of the "group having a fluorine atom" for R¹, R², and R³ include a fluorinated alkyl group, and an aryl group substituted with a fluorine atom or a fluorinated alkyl group.

Examples of the "-CR¹=CR²R³" in the formula (b-1) include the following groups. A plurality of - CR¹=CR²R³ are the same as or different from each other.

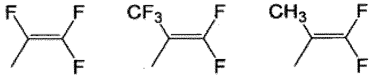

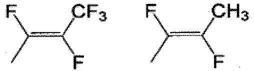

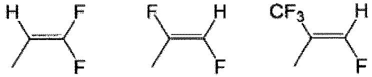

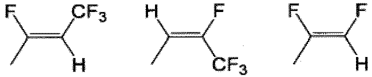

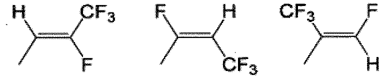

In one embodiment, m in the formula (b-1) is 1, 2, 3, 4, or 5, preferably 1.

In one embodiment, n in the formula (b-1) is 1, 2, 3, 4, or 5, preferably 1.

In one embodiment, n and m in the formula (b-1) are the same or different.

When m in the formula (b-1) is 1, "-CR¹=CR²R³" accompanied by m, and A may bond to each other in any positional relationship of ortho, meta, or para position on the benzene ring, and preferably in the positional relationship of para position.

When n in the formula (b-1) is 1, "-CR¹=CR²R³" accompanied by n, and A may bond to each other in any positional relationship of ortho, meta, or para position on the benzene ring, and preferably in the positional relationship of para position.

Specific examples of the compound represented by the formula (b-1) include compounds represented by each of the following formulas (b-2) to (b-4).

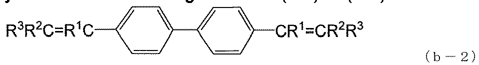

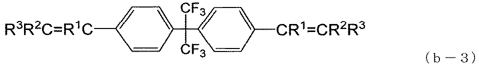

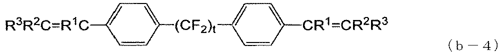

In the formulas (b-2) to (b-4), R¹, R², and R³ are as defined in the formula (b-1). t is preferably 1 to 15 (more preferably 2 to 8, and still more preferably 3 to 6).

Further specific examples of the compound represented by the formula (b-1) include the following compounds. These compounds can be synthesized, for example, by referring to WO2014/167797 or WO2016/017187.

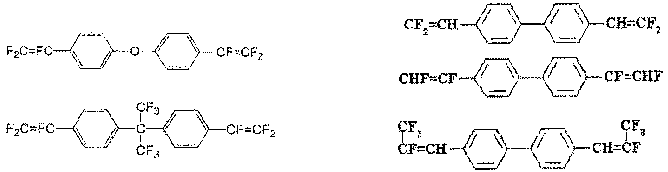

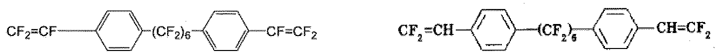

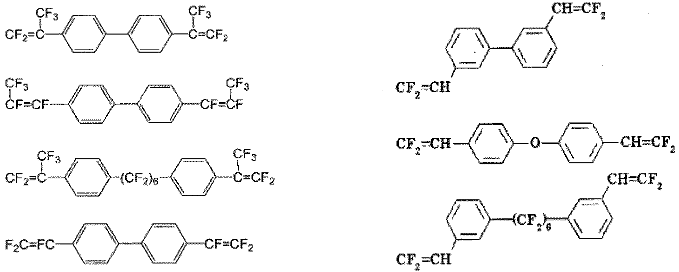

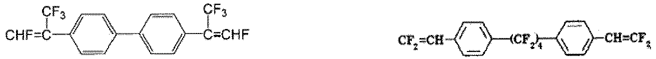

### (Component (c): Compound represented by formula (c-1))

The component (c) is a compound represented by the formula (c-1) described above.

In one embodiment, t in the formula (c-1) is 2 or 3.

When t is 2, compounds represented by each of the following formulas may be given, for example.

CH₂=CH-(O)ₙZ-(O)ₙCH=CH₂

CH₂=CH-(CH₂)ₘ-Z-(CH₂)ₘ-CH=CH₂

CH₂=CH-Z-CH=CH₂

wherein in the formulas, Z, m, and n are as defined in the formula (c-1).

In one embodiment, Z is a linear or branched alkylene or cycloalkylene group including 1 to 18 carbon atoms. Z has or does not have an oxygen atom. When Z is an alkylene group or a cycloalkylene group, in these groups, no hydrogen atom is replaced by a fluorine atom, or a part or all of hydrogen atoms are replaced by fluorine atoms. Z is a (per)fluoropolyoxyalkylene group, for example.

In one embodiment, Z is a perfluoroalkylene group including 4 to 12 carbon atoms, and preferably 4 to 8 carbon atoms.

In one embodiment, Z contains one or more groups selected from the followings:

-CF₂CF₂O-

-CF₂CF(CF₃)O-

-CF₂O-

-CF(CF₃)O-

-CF₂CF₂CF₂O-

-CF₂-CH₂CH₂O-

-C₃F₆O-.

In one embodiment, Z is a group represented by the following formula:

-(Q)ₚ-CF₂O-(CF₂CF₂O)ₘ(CF₂O)ₙ-CF₂-(Q)ₚ-.

In the formula, Q is an alkylene or oxyalkylene group including 1 to 10 carbon atoms, p is 0 or 1, and the m/n ratio is 0.2 to 5.

In one embodiment, Q is selected from the followings.

-CH₂OCH₂-

-CH₂O(CH₂CH₂O)ₛCH₂-, wherein the formula, s is an integer of 1 to 3.

When t is 3, Z is preferably a trivalent residue corresponding to triazine-2,4,6-(1H,3H,5H)-trione.

Specific examples of the compound represented by the formula (c-1) include the followings:

CH₂=CH-(CF₂)ₓ-CH=CH₂

CH₂=CH-CH₂-(CF₂)ₓ-CH₂-CH=CH₂

CF₂=CH-(CF₂)ₓ-CH=CF₂

wherein in the formulas, x is 2 to 24.

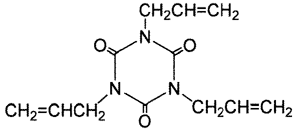

### (Component (d): Organic peroxide)

The rubber composition contains or does not contain an organic peroxide as the component (d).

In one embodiment, the rubber composition contains a component (d), whereby crosslinking of the rubber composition can proceed suitably.

The component (d) is not particularly limited, and known materials for crosslinking of a fluorine-based elastomer can be used, and examples thereof include dicumyl peroxide, di-t-butylperoxydiisopropylbenzene, 2,5-dimethyl-2,5-di(t-butylperoxy)hexane, and the like.

### (Component (e): Reactive compound or fluorine-containing oligomer)

The rubber composition contains or does not contain, as the component (e), one or more compounds selected from the group consisting of a reactive compound having a perfluoro skeleton or a siloxane skeleton (hereinafter, also simply referred to as the "reactive compound") and a fluorine-containing oligomer.

In one embodiment, the rubber composition contains the component (e), whereby the effect of increasing the plasma resistance of the rubber is obtained.

A compound being "reactive" means that the compound can react with each other during crosslinking (curing)of the rubber composition. Through this reaction, the reactive compounds can be bonded with each other. The reactive compound may also react with the component (a). Through this reaction, the reactive compound may be bonded with the component (a). The reactive compound preferably has an alkenyl group as a group (reactive group) imparting such reactivity to itself.

Examples of the alkenyl group include, for example, a vinyl group, an allyl group, a butenyl group, a pentenyl group, a hexenyl group, a heptenyl group, and the like. As the alkenyl group, a vinyl group is preferable among these groups.

The reactive compound preferably has two or more alkenyl groups in the molecule. The two or more alkenyl groups may be the same as or different from each other.

In one embodiment, the reactive compound is a compound having a perfluoroskeleton which contains an alkenyl group. The compound having a perfluoroskeleton which contains an alkenyl group in the molecular may have, for example, a divalent perfluoropolyether structure or a divalent perfluoroalkylene structure.

In one embodiment, the reactive compound has a divalent perfluoropolyether structure or a divalent perfluoroalkylene structure, and has two or more alkenyl groups at the terminal or a side chain.

As such a reactive compound, for example, compounds like fluorine-based elastomers described in paragraphs [0016] to [0022] of JP 2003-183402 A, and perfluoro compounds described in JP 11-116684 A or paragraphs [0006] to [0014] of JP 11-116685 A can be used.

In one embodiment, the reactive compound is a compound represented by the following formula (e-1):

CH₂=CH-(X)ₚ-(R^{f}-Q)ₐ-R^{f}-(X)ₚ-CH=CH₂ (e-1).

In the formulae (e-1), two X's are independently -CH₂-, -CH₂O-, CH₂OCH₂-, -Y-NR¹SO₂-, or -Y-NR¹-CO-, provided that Y is -CH₂- or -Si(CH₃)₂-Ph- (Ph: phenylene group).

R¹ is a hydrogen atom or a substituted or unsubstituted monovalent hydrocarbon group.

R^{f} is a divalent perfluoroalkylene group or a divalent perfluoropolyether group.

Two p's are independently 0 or 1.

a is an integer of 0 or more.

Q is a divalent group represented by any one of the following formulas (e-2) to (e-4).

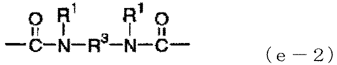

-(X)ₚ-CH₂CH₂R⁴CH₂CH₂-(X)ₚ- (e - 3)

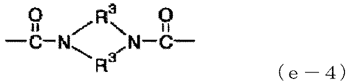

In the formulas (e-2) to (e-4), X, p, and R¹ are as defined in the formula (e-1).

R³ is a substituted or unsubstituted divalent hydrocarbon group.

R⁴ is a substituted or unsubstituted divalent hydrocarbon group in which one or two or more of an oxygen atom, a nitrogen atom, a silicon atom, and a sulfur atom may be interposed therein, or a functional group represented by the following formula (e-5) or (e-6).

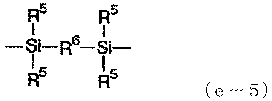

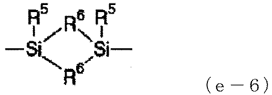

In the formulas (e-5) and (e-6), R⁵ is a substituted or unsubstituted monovalent hydrocarbon group, R⁶ is a group having one or two or more of a carbon atom, an oxygen atom, a nitrogen atom, a silicon atom, and a sulfur atom in the main chain structure.

In one embodiment, in the formula (e-1), a=0. In this case, the compound represented by the formula (e-1) is a compound represented by the following formula (e-7):

CH₂=CH-(X)ₚ-R^{f}-(X)ₚ-CH=CH₂(e-7).

In the formula (e-7), X, p, and R^{f} are as defined in the formula (e-1).

Specific examples of R^{f} include the following groups:

-CₘF₂ₙ- (m and n: an integer of 1 or more),

-[CF(CF₃)OCF₂]ₚ-(CF₂)ᵣ[CF₂OCF(CF₃)]_{q}-

-CF₂CF₂-[OCF₂CF₂CF_{2]w}-OCF₂CF₂-.

In one embodiment, the reactive compound is a compound having a siloxane skeleton and an alkenyl group.

Examples of the compound having a siloxane skeleton and an alkenyl group in the molecule include a polymer of methylvinylsiloxane; a polymer of dimethylsiloxane; a copolymer of dimethylsiloxane and methylvinylsiloxane; a copolymer of dimethylsiloxane, methylvinylsiloxane, and methylphenylsiloxane; and the like. In addition, an organopolysiloxane having an alkenyl group in the molecule which is an addition polymerization type liquid silicone rubber is exemplified.

The reactive compound is also commercially available, and examples thereof include "SIFEL" (registered trademark) manufactured by Shin-Etsu Chemical Co., Ltd.

The fluorine-containing oligomer of the component (e) is an oligomer composed of elements C, F, and O, and examples thereof include fluorine-containing oligomers having the following basic skeleton.

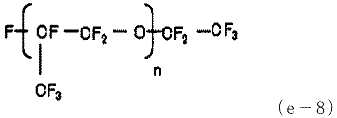

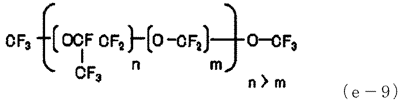

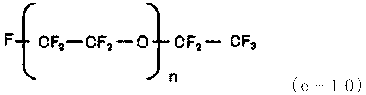

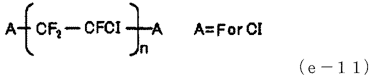

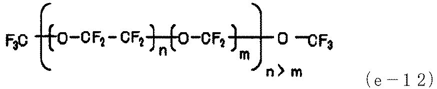

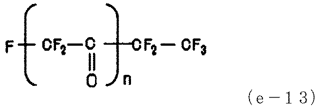

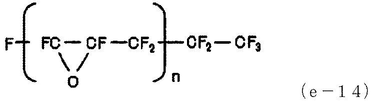

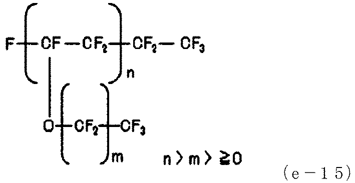

The molecular weight of the fluorine-containing oligomers represented by each of the formulas (e-8) to (e-15) vary depending upon the number of n and m, and generally, the larger the molecular weight becomes, the higher viscosity and boiling point is. As the fluorine-containing oligomer having the basic skeleton, a synthesized product or a product commercially available as a fluorine-based solvent (oil and grease) may be used. As the commercially available fluorine-containing oligomers, products of various grade having different properties such as viscosity depending on the number of n and m are known. Examples thereof include Krytox (registered trademark) series manufactured by DuPont de Nemours, Inc.; Fomblin (registered trademark) series; Galden (registered trademark) series manufactured by Solvay S.A.; and Demnum series manufactured by DAIKIN INDUSTRIES, LTD. Note that the above-described products and skeletons are merely examples, and other skeletons and products may be used as long as no hydrogen atom is contained therein. Further, as shown in the formulas (e-8) to (e-15), the fluorine-containing oligomer has an ether bond in the basic skeleton, and the fluorine-containing oligomers do not bond (crosslink) with each other during crosslinking (curing) of the rubber composition.

As the composition (e), one described above may be used alone or two or more thereof may be used in combination.

### (Component (f): Other components)

The rubber composition contains or does not contain one or more of other components other than the components (a) to (e) described above as a component (f).

Examples of the component (f) include, for example, fillers, thickeners, pigments, coupling agents, antioxidants, stabilizers, and the like.

Examples of the filler include, for example, fluororesin, carbon black, silica, and the like.

In one embodiment, the rubber composition does not contain a filler, or contains a filler in an amount of 20 parts by mass or less, 15 parts by mass or less, 10 parts by mass or less, 5 parts by mass or less, 3 parts by mass or less, 2 parts by mass or less, 1 part by mass or less, or 0.5 parts by mass or less based on 100 parts by mass of the component (a).

### (Blending amount)

In one embodiment, the rubber composition may contain the component (b) in an amount of 1 mmol or more, 2 mmol or more, 3 mmol or more, 4 mmol or more, or 5 mmol or more based on 100 g of the component (a), and may contain the component (b) in an amount of 60 mmol or less, 50 mmol or less, 40 mmol or less, or 30 mmol or less based on 100 g of the component (a).

The rubber composition preferably contains the component (b) in an amount of 5 to 30 mmol based on 100 g of the component (a).

In one embodiment, the rubber composition may contain the component (c) in an amount of 0.5 mmol or more, 1 mmol or more, 1.5 mmol or more, or 2 mmol or more based on 100 g of the component (a), and may contain the component (c) in an amount of 60 mmol or less, 50 mmol or less, 40 mmol or less, or 30 mmol or less based on 100 g of the component (a).

The rubber composition preferably contains the component (c) in a amount of 2 to 30 mmol based on 100 g of the component (a).

In one embodiment, the rubber composition may contain the component (b) and the component (c) in a total amount of 1 mmol or more, 2 mmol or more, 3 mmol or more, 4 mmol or more, 5 mmol or more, 6 mmol or more, or 7 mmol or more of based on 100 g of the component (a), and may contain the component (b) and the component (c) in a total amount of 80 mmol or less, 70 mmol or less, 60 mmol or less, 50 mmol or less, or 40 mmol or less based on 100 g of the component (a).

The rubber composition preferably contains the component (b) and the component (c) in a total amount of 7 to 40 mmol based on 100 g of the component (a).

In one embodiment, the rubber composition may contain the component (d) in an amount of 0.1 to 5 parts by mass based on 100 parts by mass of the component (a).

In one embodiment, the rubber composition may contain the component (e) in an amount of 1 to 20 parts by mass based on 100 parts by mass of the component (a).

In one embodiment, 50% by mass or more, 60% by mass or more, 70% by mass or more, 80% by mass or more, 90% by mass or more, 95% by mass or more, 98% by mass or more, 99% by mass or more, 99.5% by mass or more, 99.8% by mass or more, or substantially 100% by mass of the rubber composition is occupied by:
the components (a) to (c),
the components (a) to (d),
the components (a) to (e),
the components (a) to (c) and (f),
the components (a) to (d) and (f), or
the components (a) to (e) and (f).
In the case of "substantially 100% by mass," inevitable impurities may be contained.

### 2. Fluorine-containing elastomer

The fluorine-containing elastomer according to an aspect of the invention is obtained by crosslinking the rubber composition according to an aspect of the invention.

The conditions for crosslinking the rubber composition (crosslinking conditions) are not particularly limited, and for example, the rubber composition is preferably heated at 100 to 250°C for 10 minutes to 5 hours. In the primary crosslinking, a raw material (rubber composition) is normally put into a mold, and crosslinked while being pressed. For example, in the primary crosslinking, the raw material is heated at 150 to 200°C for 5 to 60 minutes. Thereafter, the primary crosslinking product is taken out from the mold, and subjected to secondary crosslinking in air or in an inert gas atmosphere. In the secondary crosslinking, the primary crosslinking product is heated at 150 to 300°C for 1 to 100 hours, for example. The crosslinking may be performed using an electric furnace or the like. It is possible to suppress deformation and the like during use by providing a heat history to the product through the secondary crosslinking.

A radiation treatment is not necessarily required during crosslinking, and it is rather preferable to omit the radiation treatment.

In one embodiment, the fluorine-containing elastomer has a hardness of 62 or higher, or 63 or higher. The upper limit thereof is not particularly limited, and is, for example, 90 or lower. The hardness is a value measured by the method described in Examples.

In one embodiment, the fluorine-containing elastomer has the compression set (150°C x 72 hours) of 27% or less, 25% or less, 23% or less, or 21% or less. The lower limit thereof is not particularly limited, and is, for example, 5% or more. Incidentally, the compression set (150°C x 72 hours) is a value measured by the method described in Examples.

### 3. Seal material

The seal material according to an aspect of the invention contains a fluorine-containing elastomer according to an aspect of the invention.

The form of the seal material is not particularly limited, and may be, for example, molded bodies such as a gasket and a seal ring.

The application of the seal material is not particularly limited, and can be widely applied to various devices, and is suitable, for example, as a seal material for a semiconductor manufacturing apparatus. Examples of the semiconductor manufacturing apparatus include a plasma apparatus, an etching apparatus, a plasma CVD apparatus, and the like.

### Examples

Examples of the invention will be described below, but the invention is not limited to these examples.

The components used in Examples and Comparative Examples are as follows.

Component (a): FKM, Diel G912, manufactured by Daikin Industries, Ltd.

Component (b): a compound represented by the following formula (b-5):

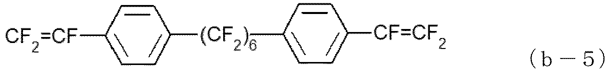

Component (c): a compound represented by the following formula (c-2), which is TAIC (triallylisocyanurate), manufactured by Mitsubishi Chemical Corporation

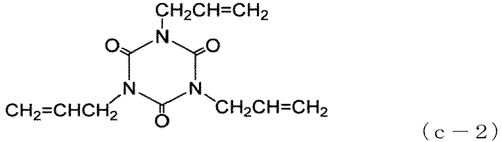

Component (c): a compound represented by the following formula (c-3), which is 1,6-divinyl(dodecafluorohexane), manufactured by Tosoh Finechem Corporation

CH₂=CH-(CF₂)ₐ-CH=CH₂ (c-3)

Component (d): 2,5-dimethyl-2,5-di(t-butylperoxy)hexane, which is Perhexa 25B, manufactured by NOF CORPORATION

Component (e): perfluoropolyether (reactive compound), which is SIFEL8370A, manufactured by Shin-Etsu Chemical Co., Ltd.

Component (e): perfluoropolyether (reactive compound), which is SIFEL8370B, manufactured by Shin-Etsu Chemical Co., Ltd.

Component (e): perfluoropolyether (fluorine-containing oligomer), which is KrytoxVPF16256, manufactured by DuPont de Nemours, Inc.

Component (f): a filler (carbon black), which is Thermax N990, manufactured by Cancarb Limited

### (Examples 1 to 7, and Comparative Examples 1 to 6)

Each rubber composition having the composition shown in Table 1 was kneaded with an open roll, and then put into a mold, heat-treated at a temperature of 170°C in air for 15 minutes, and subjected to primary crosslinking while being pressed. The primary crosslinking product was then taken out from the mold, and subjected to secondary crosslinking in air at 200°C for 10 hours. Thus, a molded body of the fluorine-containing elastomer was obtained. The molded body was shaped into an O-ring (AS568-214; inner diameter. 24.99 mm, thickness: 3.53 mm).

The obtained fluorine-containing elastomer was evaluated as follows.

### (1) Hardness

The molded body (O-ring) was placed on a microrubber hardness tester manufactured by Bareiss North America, Inc. (model: HPEII shore AM/M) to measure the hardness.

### (2) Compression set (CS) [%]

The molded body (O-ring) was compressed by 25% and retained at 150°C for 72 hours, and then released and left to stand at room temperature for 30 minutes. The thicknesses before and after the test were measured according to JIS K 6262, and the compression set value was calculated by the following equation. Compression set [%] = 100 x [(thickness before test)-(thickness after test)]/[(thickness before test)-(thickness of spacer)]

### (3) Plasma resistance

### (3-1) Weight loss ratio [%]

The molded body (O-ring) was exposed to plasma under the following conditions, and the weight loss ratio of the molded body was calculated from the weights of before and after the exposure.· Apparatus: Surface Wave Plasma Etching Apparatus manufactured by SHINKO SEIKI CO., LTD.
· Gas: O₂ (425sccm)+CF₄ (425sccm)
· Treating pressure: 40 Pa
· Output: 3 kW
· Exposure time: 2 hours
· Weight loss ratio [%]=[(weight before plasma exposure - weight immediately after completion of plasma exposure)/(weight before plasma exposure)]x100

### (3-2) Particle

It was confirmed visually whether or not particles were generated by the plasma exposure above.

### (4) Tensile characteristics

Tensile strength [MPa], elongation at break [%], and M100 [MPa] of the molded body (O-ring) were measured under the conditions at room temperature of 25±2°C and at a tensile speed of 300 mm/min using a table-top precision universal tester (manufactured by Shimadzu Corporation, model: Autograph AGS-500NX).

The results are shown in Table 1.

**Table 1**

| | | Ex. 1 | Ex. 2 | Ex. 3 | Ex. 4 | Ex. 5 | Ex. 6 | Ex. 7 | Comp. Ex. 1 | Comp. Ex. 2 | Comp. Ex. 3 | Comp. Ex. 4 | Comp. Ex. 5 | Comp. Ex. 6 |
|---|---|---|---|---|---|---|---|---|---|---|---|---|---|---|
| Composition [% by mass] | (a) Diel G912 | 100 | 100 | 100 | 100 | 100 | 100 | 100 | 100 | 100 | 100 | 100 | 100 | 100 |
| | (b) Formula (b-5) | 4.9 (8 mmol) | 7.4 (12 mmol) | 14.9 (24 mmol) | 7.4 (12 mmol) | 14.9 (24 mmol) | 7.4 (12 mmol) | 7.4 (12 mmol) | 7.4 (12 mmol) | 9.8 (16 mmol) | 17.2 (28 mmol) | - | - | - |
| | (c) Formula (c-2) | 1.0 (4 mmol) | 1.0 (4 mmol) | 1.0 (4 mmol) | 4.0 (16 mmol) | - | 4.0 (16 mmol) | 4.0 (16 mmol) | - | - | - | - | 1.0 (4 mmol) | 4.0 (16 mmol) |
| | (c) Formula (c-3) | - | - | - | - | 1.4 (4 mmol) | - | - | - | - | - | 9.9 (28 mmol) | 4.2 (12 mmol) | - |
| | (d) Perhexa 25B | 1.5 | 1.5 | 1.5 | 1.5 | 1.5 | 1.5 | 1.5 | 1.5 | 1.5 | 1.5 | 1.5 | 1.5 | 1.5 |
| | (e) SIFEL8370A | - | - | - | - | - | 6.0 | - | - | - | - | - | - | - |
| | (e) SIFEL8370B | - | - | - | - | - | 6.0 | - | - | - | - | - | - | - |
| | (e) KrytoxVPF16256 | - | - | - | - | - | - | 6.0 | - | - | - | - | - | - |
| | (f) Thermax N990 | - | - | - | - | - | - | - | - | - | - | - | - | 15.0 |
| total moles of (b) + (c) | | 12 mmol | 16 mmol | 28 mmol | 28 mmol | 28 mmol | 28 mmol | 28 mmol | 12 mmol | 16 mmol | 28 mmol | 28 mmol | 16 mmol | 16 mmol |
| Hardness | | 63 | 67 | 80 | 73 | 72 | 69 | 69 | 64 | 64 | 72 | 57 | 61 | 74 |
| Compression set [%] | | 13 | 14 | 12 | 12 | 21 | 10 | 13 | 28 | 28 | 32 | 17 | 10 | 9 |
| Plasma resistance | Weight loss ratio [%] | 2.1 | 2.2 | 2.3 | 1.9 | 2.1 | 1.2 | 1.1 | 1.9 | 1.9 | 1.9 | 1.8 | 1.8 | 3.0 |
| | Particle | Absence | Absence | Absence | Absence | Absence | Absence | Absence | Absence | Absence | Absence | Absence | Absence | Presence |
| Tensile characteristics | Tensile strength [MPa] | 6.2 | 10.0 | 12.8 | 14.7 | 6.5 | 12.4 | 13.7 | 9.0 | 10.3 | 11.4 | 5.6 | 5.9 | 16.9 |
| | Elongation at break [%] | 191 | 189 | 129 | 187 | 139 | 198 | 183 | 271 | 297 | 215 | 249 | 208 | 180 |
| | M100 [MPa] | 1.6 | 2.6 | 9.3 | 4.9 | 3.6 | 3.5 | 4.5 | 1.7 | 1.6 | 3.8 | 1.1 | 1.3 | 5.4 |

## Claims

1. A rubber composition comprising:
(a) a crosslinking reactive fluorine-containing rubber,
(b) a compound represented by the following formula (b-1): 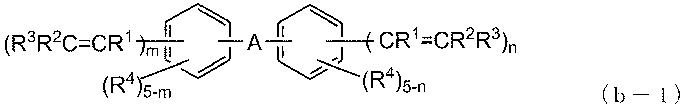 wherein in the formula (b-1), A is a single bond, -O-, -S-, a heteroatom-containing group, a linear or branched alkylene group, a cycloalkylene group, or an arylene group, in which no hydrogen atom is replaced by a fluorine atom or a part or all of hydrogen atoms are replaced by a fluorine atom; R¹, R², R³, and R⁴ are independently selected from the group consisting of a hydrogen atom, a fluorine atom, an alkyl group, a fluorinated alkyl group, or a substituted or unsubstituted aryl group; a plurality of R¹'s are the same as or different from each other; a plurality of R²'s are the same as or different from each other; a plurality of R³'s are the same as or different from each other; a plurality of R⁴'s are the same as or different from each other, at least one of R¹, R², and R³ is a fluorine atom or a group having a fluorine atom; m is an integer of 1 to 5; and n is an integer of 1 to 5; and
(c) a compound represented by the following formula (c-1): 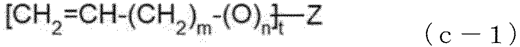 wherein in the formula (c-1), n and m are independently 0 or 1; t is an integer of 2 or more; and Z is a t-valent linking group.

2. The rubber composition according to claim 1, further comprising (d) an organic peroxide.

3. The rubber composition according to claim 1 or 2, further comprising (e) one or more selected from the group consisting of a reactive compound having a perfluoro skeleton or a siloxane skeleton, and a fluorine-containing oligomer.

4. The rubber composition according to any one of claims 1 to 3, wherein the component (b) is comprised in an amount of 5 to 30 mmol based on 100 g of the component (a).

5. The rubber composition according to any one of claims 1 to 4, wherein the component (c) is comprised in an amount of 2 to 30 mmol based on 100 g of the component (a).

6. The rubber composition according to any one of claims 1 to 5, wherein the component (b) and the component (c) are comprised in a total amount of 7 to 40 mmol based on 100 g of the component (a).

7. The rubber composition according to any one of claims 1 to 6, wherein the component (c) is triallylisocyanurate or 1,6-divinyl(dodecafluorohexane).

8. A fluorine-containing elastomer obtained by crosslinking the rubber composition according to any one of claims 1 to 7.

9. A seal material comprising the fluorine-containing elastomer according to claim 8.

## Patentansprüche

1. Gummizusammensetzung, aufweisend:
(a) einen vernetzbaren reaktiven Fluor-enthaltenden Gummi;
(b) eine Verbindung, welche durch die folgende Formel (b-1) dargestellt ist: 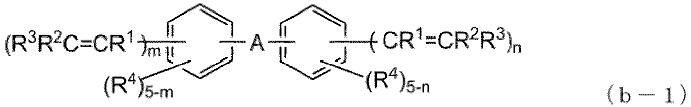 wobei in der Formel (b-1), A eine Einzelbindung, -O-, -S-, eine Heteroatom-enthaltende Gruppe, eine lineare oder verzweigte Alkylengruppe, eine Cykloalkylengruppe, oder eine Arylengruppe ist, in welcher kein Wasserstoffatom durch ein Fluoratom ersetzt ist, oder in welcher ein Teil oder alle der Wasserstoffatome durch ein Fluoratom ersetzt ist bzw. sind; wobei R¹, R², R³, und R⁴ unabhängig voneinander ausgewählt sind aus der Gruppe, welche aus einem Wasserstoffatom, einem Fluoratom, einer Alkylgruppe, einer fluorierten Alkylgruppe oder einer substituierten oder unsubstituierten Arylgruppe besteht; wobei eine Vielzahl von R¹'s gleich oder unterschiedlich zueinander sind; wobei eine Vielzahl von R²'s gleich oder unterschiedlich zueinander sind; wobei eine Vielzahl von R³'s gleich oder unterschiedlich zueinander sind; wobei eine Vielzahl von R⁴'s gleich oder unterschiedlich zueinander sind; wobei mindestens eines von R¹, R², und R³ ein Fluoratom oder eine Gruppe mit einem Fluoratom ist; wobei m eine ganze Zahl von 1 bis 5 ist; und wobei n eine ganze Zahl von 1 bis 5 ist; und
(c) eine Verbindung, welche durch die folgende Formel (c-1) dargestellt ist: 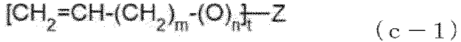 wobei in der Formel (c-1), n und m unabhängig voneinander 0 oder 1 sind; t eine ganze Zahl von 2 oder mehr ist; und Z eine t-valente verbindende Gruppe ist.

2. Gummizusammensetzung gemäss Anspruch 1, ferner aufweisend (d) ein organisches Peroxid.

3. Gummizusammensetzung gemäss Anspruch 1 oder 2, ferner aufweisend (e) ein/eine oder mehrere ausgewählt aus der Gruppe bestehend aus einer reaktiven Verbindung aufweisend ein Perfluoro-Gerüst oder ein Siloxan-Gerüst, und ein Fluor-enthaltendes Oligomer.

4. Gummizusammensetzung gemäss einem der Ansprüche 1 bis 3, wobei die Komponente (b) in einer Menge von 5 bis 30 mmol enthalten ist, basierend auf 100g der Komponente (a).

5. Gummizusammensetzung gemäss einem der Ansprüche 1 bis 4, wobei die Komponente (c) in einer Menge von 2 bis 30 mmol enthalten ist, basierend auf 100g der Komponente (a).

6. Gummizusammensetzung gemäss einem der Ansprüche 1 bis 5, wobei die Komponente (b) und die Komponente (c) in einer Gesamtmenge von 7 bis 40 mmol enthalten sind, basierend auf 100g der Komponente (a).

7. Gummizusammensetzung gemäss einem der Ansprüche 1 bis 6, wobei es sich bei der Komponente (c) um Triallylisocyanurat oder 1,6-Divinyl(dodecafluorohexan) handelt.

8. Fluor-enthaltendes Elastomer, hergestellt durch Vernetzen der Gummizusammensetzung gemäss einem der Ansprüche 1 bis 7.

9. Dichtungsmaterial, aufweisend das Fluor-enthaltende Elastomer gemäss Anspruch 8.

## Revendications

1. Une composition de caoutchouc comprenant :
(a) un caoutchouc réactif de réticulation contenant du fluor
(b) un composé représenté par la formule (b-1) suivante : 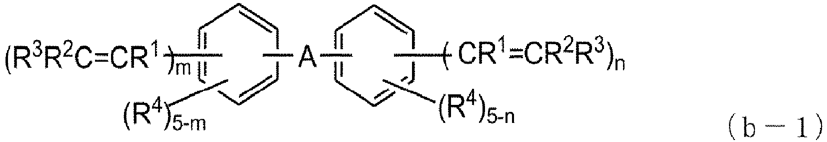 dans laquelle dans la formule (b-1), A est une liaison simple, -O-, -S-, un groupe contenant un hétéroatome, un groupe alkylène linéaire ou ramifié, un groupe cycloalkylène ou un groupe arylène, dans lequel aucun atome d'hydrogène n'est remplacé par un atome de fluor ou une partie ou la totalité des atomes d'hydrogène sont remplacés par un atome de fluor; R¹, R², R³, et R⁴ sont indépendamment choisis dans le groupe constitué par un atome d'hydrogène, un atome de fluor, un groupe alkyle, un groupe alkyle fluoré, ou un groupe aryle substitué ou non substitué; une pluralité de R¹ sont identiques ou différents les uns des autres; une pluralité de R² sont identiques ou différents les uns des autres ; une pluralité de R³ sont identiques ou différents les uns des autres ; une pluralité de R⁴ sont identiques ou différents les uns des autres, au moins l'un des R¹, R², R³ est un atome de fluor ou un groupe ayant un atome de fluor; m est un entier de 1 à 5 ; et n est un entier de 1 à 5 ; et
(c) un composé représenté par la formule (c-1) suivante : 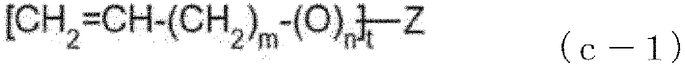 dans laquelle, dans la formule (c-1), n et m sont indépendamment 0 ou 1 ; t est un entier de 2 ou plus ; et Z est un groupe de liaison t-valent.

2. La composition de caoutchouc selon la revendication 1, comprenant en outre (d) un peroxyde organique.

3. La composition de caoutchouc selon la revendication 1 ou 2, comprenant en outre (e) un ou plusieurs éléments choisis dans le groupe constitué d'un composé réactif ayant un squelette perfluoré ou un squelette siloxane, et un oligomère contenant du fluor.

4. La composition de caoutchouc selon l'une quelconque des revendications 1 à 3, dans laquelle le composant (b) est compris en une quantité de 5 à 30 mmol sur la base de 100 g du composant (a).

5. La composition de caoutchouc selon l'une quelconque des revendications 1 à 4, dans laquelle le composant (c) est compris en une quantité de 2 à 30 mmol sur la base de 100 g du composant (a).

6. La composition de caoutchouc selon l'une quelconque des revendications 1 à 5, dans laquelle le composant (b) et le composant (c) sont compris dans une quantité totale de 7 à 40 mmol sur la base de 100 g du composant (a).

7. La composition de caoutchouc selon l'une quelconque des revendications 1 à 6, dans laquelle le composant (c) est le triallylisocyanurate ou le 1,6-divinyl(dodécafluorohexane).

8. Un élastomère contenant du fluor obtenu par réticulation de la composition de caoutchouc selon l'une quelconque des revendications 1 à 7.

9. Un matériau de joint comprenant l'élastomère contenant du fluor selon la revendication 8.
